Europäisches Patentamt

European Patent Office

Office européen des brevets

(11) Veröffentlichungsnummer: **0 435 045 A2**

(12) **EUROPÄISCHE PATENTANMELDUNG**

(21) Anmeldenummer: **90123615.8**

(22) Anmeldetag: **08.12.90**

(51) Int. Cl.⁵: **B23B 31/08**

(30) Priorität: **23.12.89 DE 3942892**

(43) Veröffentlichungstag der Anmeldung:
**03.07.91 Patentblatt 91/27**

(84) Benannte Vertragsstaaten:
**DE FR GB IT**

(71) Anmelder: **BAYER AG**

**W-5090 Leverkusen 1 Bayerwerk(DE)**

(72) Erfinder: **Fischer, Frank, Dipl.-Ing., Univ. of
Washington
MBA-Programm, School of Business
Administration
137 McKenzie Hall, Seattle,
Washington98(US)**
Erfinder: **Röhr, Harry, Dr.
Zur Ville 21
W-5020 Frechen 4(DE)**

(54) Verfahren zur Herstellung eines Halbzeuges mit elektrisch leitenden Kunststoffschichten.

(57) Es wird ein neues Verfahren zur Herstellung
eines Halbzeuges beschrieben, bei dem das Verschweißen von elektrisch leitenden und nichtleitenden Kunststoffschichten durch die Stromwärme einer
elektrisch leitenden Schicht nach dem Anlegen einer
entsprechenden Spannung erreicht wird. Das neue
Verfahren besitzt Vorteile durch den Verzicht auf
aufwendige, anfällige Aufheizvorrichtungen und ist in
einem weiten Rahmen einsetzbar.

## VERFAHREN ZUR HERSTELLUNG EINES HALBZEUGES MIT ELEKTRISCH LEITENDEN KUNSTSTOFF-SCHICHTEN

Die vorliegende Erfindung betrifft ein Verfahren zur Herstellung eines Halbzeuges mit mindestens einer elektrisch leitenden Kunststoffschicht mittels Widerstandsschweißen.

Verfahren zur Aufbringung elektrisch leitender Kunststoffe auf ein isolierendes Substrat sind beispielsweise aus US-3 769 132 bekannt. Dieses Verfahren beinhaltet die Herstellung einer zweischichtigen Kunststoffolie zur Verwendung in Hochspannungskondensatoren und zu Isolationszwekken. In dem beschriebenen Verfahren wird die elektrisch leitende Kunststoffschicht auf ein Substrat aufgebracht und unter Hitzeeinwirkung auf das Substrat gepreßt. Das Verfahren vermeidet ausdrücklich die Erweichung oder gar das Anschmelzen des Substrates. Vielmehr wird die Verbindung zwischen elektrisch leitendem Kunststoff und Substrat durch das Erwärmen des elektrisch leitenden Kunststoffes über die Glastemperatur hinaus und das anschließende Pressen des weichen, elektrisch leitenden Kunststoffes in das noch feste Substrat erreicht. Zur Durchführung dieses Verfahrens ist es daher notwendig, besonders bei der Verwendung desselben Kunststoffs als Grundmaterial für die elektrisch leitende und die Substratschicht, das Substrat durch zusätzliche Vernetzung gegenüber thermischer Einwirkung stabiler zu machen.

In einer Variante des bekannten Verfahrens wird die elektrisch leitende Kunststoffschicht als Lösung auf das Substrat aufgesprüht.

In beiden Varianten des Verfahrens existiert zwischen den Schichten eine adhäsive Verbindung, die nicht als stoffschlüssig bezeichnet werden kann. Mit einer solchen Verbindung ist es nicht möglich, die Festigkeit des Grundwerkstoffes zu erreichen. Dieser Nachteil verhindert eine breite Anwendung der solchermaßen hergestellten Folien in Gebieten, in denen die Kunststoffe stärkeren mechanischen Belastungen ausgesetzt sind. Insbesondere bei der Anwendung faserverstärkter Thermoplaste ist die geringe mechanische Festigkeit der Verbindung zwischen der faserverstärkten Schicht und der elektrisch leitenden Schicht besonders nachteilig, da an faserverstärkte Materialien im allgemeinen erhöhte Anforderungen an die mechanische Belastbarkeit gestellt werden.

Bekannt ist ferner ein Verfahren zum Verschweißen zweier PVC-Folien mittels einer zwischen die zu verschweißenden Folien gelegten, elektrisch leitenden Folie, die aus dem gleichen Grundmaterial besteht (PVC) und während des Schweißvorganges vollständig aufgeschmolzen wird (JP-8 723 088). Die zwei Folien, die in diesem Verfahren miteinander verschweißt werden, sind nicht elektrisch leitend.

Es besteht daher die Aufgabe, ein verbessertes Verfahren zur Herstellung von Halbzeugen zu entwickeln, die aus Kunststoffschichten bestehen, wovon mindestens eine Schicht ein elektrisch leitender Kunststoff ist. Die Verbindungen zwischen den Schichten sollten dabei eine hohe mechanische Festigkeit aufweisen, um vielseitige Anwendungen zu ermöglichen. Gleichzeitig sollten die elektrisch leitenden Schichten auch im Laminat eine genügend hohe Leitfähigkeit aufweisen, um auch im Bereich von Niederspannungen bis maximal 500 Volt technische Anwendungen zuzulassen. Aus diesem Grunde sollte der spezifische Widerstand der einzelnen elektrisch leitenden Schichten unter 100 $\Omega \cdot cm$, bevorzugt unter 5 $\Omega \cdot cm$, besonders bevorzugt unter 2 $\Omega \cdot cm$ liegen.

Das neue Widerstandsschweißverfahren zur Herstellung eines Halbzeuges mit mindestens einer elektrisch leitenden Kunststoffschicht und einer elektrisch nicht leitenden Kunststoffschicht ist dadurch gekennzeichnet, daß die zum Verschweißen der elektrisch leitenden Kunststoffschicht mit der zweiten Kunststoffschicht notwendige Wärme mittels eines durch die elektrisch leitende Kunststoffschicht fließenden Stromes erzeugt wird.

Es wurde überraschend gefunden, daß sich die Leitfähigkeit der elektrisch leitenden Kunststoffschicht trotz aufheizen und Anschmelzen der Folie in einem nur geringen Maße verschlechtert. Die Leitfähigkeit der elektisch leitenden Kunststoffschicht verringerte sich um weniger als 60 % der Leitfähigkeit, die die Schicht vor Anwendung des neuen Verfahrens aufwies. Zudem lassen sich mit dem neuen Verfahren bei gleichem Material ähnlich hohe und höhere Schweißnahtfestigkeiten wie beispielsweise mit dem bekannten Ultraschallschweißen erreichen.

Durch die entsprechende Anpassung der elektrisch leitenden Schicht lassen sich auch komplexe Geometrien, beispielsweise dreidimensionale Formteile mit der elektrisch leitenden Folie fest verbinden. Weiter ist die Schweißfläche in ihrer Ausdehnung durch das neue Verfahren praktisch beliebig. Die Verwendung von üblichen Netzspannungen bis zu 500 Volt, die ohne Transformation oder Frequenzwandler zur Erzeugung der zum Aufschmelzen notwendigen Stromwärme an die elektrisch leitende Kunststoffschicht angelegt werden, machen das Verfahren besonders wirtschaftlich.

Geeignet für das Verfahren ist insbesondere die Verwendung elektrisch leitender Kunststoffe mit Polycarbonaten als Basismaterial, insbesondere auf der Grundlage von Bisphenol A, wie beispielsweise in EP 014 310 B1 beschrieben, oder auf der Grundlage von Dihydroxydiphenylcycloalkanen, wie beispielsweise in der deutschen Patentanmeldung der Anmelderin (P 3 832 396, Titel: Dihydroxydiphenylcycloalkane, Polycarbonate), wobei die Cycloalkane bevorzugt mit Methylgruppen, insbesondere in der 3- bzw. 3,3-Stellung, substituiert sind, ist besonders vorteilhaft. Ein Vorteil besteht in der beobachteten Eigenschaft der verwendeten elektrisch leitenden Polycarbonate, mit einer Vielzahl von Kunststoffen mechanisch besonders belastbare Verbindungen einzugehen. Die elektrisch leitenden Polycarbonate eignen sich besonders auch zur Herstellung von Halbzeugen unter Verwendung von temperaturbeständigen Kunststoffen. Temperaturbeständige Kunststoffe zeichnen sich durch eine hohe Schmelztemperatur bzw. hohe Zersetzungstemperatur aus. Da sich die Schmelztemperaturen, besonders der amorphen Kunststoffe nicht genau angeben lassen, sind hier mit temperaturbeständigen Kunststoffen solche gemeint, die sich beispielsweise oberhalb von 220°C oder sogar oberhalb von 240°C, in Fällen von hochtemperaturbeständigen Kunststoffen sogar über 280°C noch mittels Spritzguß verarbeiten lassen. Weiter werden durch den Zusatz nichtmetallischer, elektrisch leitender Stoffe, insbesondere Leitfähigkeitsruß, zum einen Korrosionen, zum anderen Kerbungen innerhalb des durch das neue Verfahren hergestellten Halbzeuges vermieden.

Als nichtleitende Kunststoffe eignen sich zur Verwendung in dem neuen Verfahren viele der thermoplastisch verarbeitbaren, auch mehrphasigen Polymerisationskunststoffe. Beispielsweise lassen sich neben den oben bereits erwähnten Polycarbonaten ohne Leitfähigkeitszusätze auch Polyarylensulfide, insbesondere Polyphenylensulfid, sowie Polyester auf der Basis aromatischer Dicarbonsäuren und Glycolen als Schichtmaterialien verwenden, ebenso Copolymerer und Polymerblends wie beispielsweise Acryl-nitril-Butadien-Styrol-Polymerisate. Diese nicht leitenden Kunststoffe können auch in faserverstärkten Varianten durch das neue Verfahren in das herzustellende Halbzeug integriert werden, wobei sich die an sich bekannten, guten mechanischen Eigenschaften faserverstärkter Kunststoffe auf das neue Halbzeug übertragen lassen.

Halbzeuge mit diesen Eigenschaften können nach weiterer Verarbeitung überall dort zum Einsatz kommen, wo eine elektrische Stromführung bzw. ein elektrisches Heizen durch Metalldrähte geschieht. Die hohe elektrische Leitfähigkeit des neuen Werkstoffes macht ebenfalls den Einsatz bei Spannungen unter 380 Volt möglich. Als besondere Einsatzgebiete wären die Verwendung im Bereich elektrischer Haushaltsgeräte, z.B. als Folien in elektrischen Heizkissen oder Heizdecken, bei elektrischen Fußbodenheizungen, zur vereinfachten Beschichtung von Kunststoffen mit pulvrigen Substanzen, zum UV-Schutz von Kunststoffen, etc. denkbar.

Ein weiterer Vorteil des neuen Verfahrens besteht in der einfach durchzuführenden Herstellung von Laminaten mit mehr als zwei oder drei Schichten.

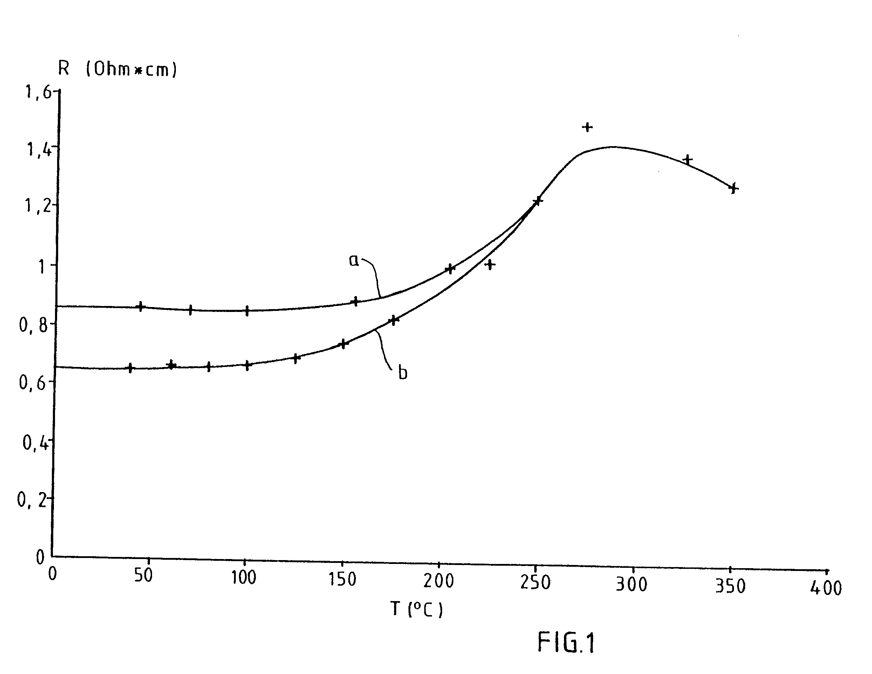

Das neue Verfahren wird anhand der Zeichnung und einer Durchführungsform näher erläuterte Dabei zeigt Fig. 1 die Widerstandsmessung an einer elektrisch leitenden Schicht bei Durchführung des neuen Verfahrens.

Eine beispielhafte Vorrichtung zur Herstellung des neuen Schichtstoffes nach dem neuen Widerstandsschweißverfahren besteht aus einem elektrisch isoliertem Preßwerkzeug, zwei metallischen Kontaktklemmen, sowie einer Spannungsquelle mit entsprechenden Zuleitungen.

Um beispielsweise ein Halbzeug mit insgesamt drei Schichten herzustellen, wobei die nichtleitenden äußeren Schichten aus glasfaserverstärktem Polyphenylensulfid bestehen, wird eine rußgefüllte Polycarbonatfolie auf die Größe der PPS-Platten zurechtgeschnitten, danach werden die drei Schichten in der gewünschten Reihenfolge aufeinander gelegt und die elektrisch leitende Folie mit den Metallklemmen entsprechend kontaktiert. Nach dem Aufbringen eines Preßdruckes von 0,25 N/mm$^2$ und dem Anlegen einer Spannung von 220 Volt wird die elektrisch leitende Schicht auf ca. 320°C geheizt. Nach 20 Sekunden wird die Spannung abgeschaltet und das Halbzeug noch etwa 15 Sekunden unter Preßdruck gehalten. Durch entsprechende Änderung der Prozeßparameter, also der angelegten Spannung der Heiz-oder Preßzeit können in weiteren Anwendungsbeispielen des neuen Verfahrens ABS, PMMA, oder Polycarbonate an Stelle von PPS verwendet werden.

Die Festigkeit der Verbindung zwischen den leitenden und nichtleitenden Schichten liegt in einem Bereich von beispielsweise 50 bis 55 N/mm$^2$ für nicht faserverstärkte Polycarbonatplatten. Die Festigkeit der Verbindung gleicht somit zumindest den mit üblichen Schweißverfahren für Kunststoffe erreichbaren Festigkeiten.

Messungen des spezifischen Durchgangswiderstandes gegenüber der Temperatur an der leitenden Kunststoffschicht einer dreischichtigen Platte, wobei die nicht leitenden Schichten aus faserverstärktem PPS und die elektrisch leitende Schicht aus rußgefüllter PC-Folie besteht, zeigt Fig. 1, wobei Kurve b den Widerstandsverlauf beim Aufheizen und Kurve a den Widerstandsverlauf beim Abkühlen bzw. nach dem Verschweißen beschreibt. Es ergibt sich ein spezifischer Durchgangswiderstand von 0,9 Ohm•cm gegenüber 0,7 Ohm•cm. Letzterer Wert ist der spezifische Durchgangswiderstand der unverarbeiteten, elektrisch leitenden Kunststoffschicht. Die Leitfähigkeit hat sich also um weniger als 30 %. verschlechtert.

**Ansprüche**

1. Verfahren zur Herstellung eines Halbzeuges mit mindestens einer elektrisch leitenden Kunststoffschicht durch ein Widerstandsschweißverfahren, dadurch gekennzeichnet, daß die zum Verschweißen der elektrisch leitenden Kunststoffschicht mit der zweiten Kunststoffschicht notwendige Wärme mittels eines durch die elektrisch leitende Kunststoffschicht fließenden Stromes erzeugt wird.

FIG.1